# EUROPEAN PATENT APPLICATION

(11) **EP 0 884 487 A2**
(43) Date of publication of application: **16.12.1998**
(21) Application number: 98870133.0
(22) Date of filing: 10.06.1998
(51) Int. Cl.: F16B 12/12

(54) **Joining,- connecting-, assembling and fastening system for quick assembly, mounting, connecting, joining or fastening of building elements and construction elements**

(30) Priority: 11.06.1997 BE 9700501
(71) Applicant: Wyns, Debby Leonard, 3120 Tremelo (BE)
(72) Inventor: Wyns, Antoine Anna, 3120 Tremelo (BE)

(57) **Abstract**

This invention relates to a joining/connecting system or fasteningsystem, for the purpose of fast assembly and mounting of buildingelements and constructionelements, whereby a rigid angular element is slit in the corresponding brackets which are fixed on the buildingelements or constructionelements. Joining/connecting system or fasteningsystem.
This joining/connecting system or fasteningsystem can, depending of the application, be secured.
The placing and fixing of the brackets can be done quickly by the use of a template. By means of this joining/connecting system or fasteningsystem, the construction- or buildingelements can be assembled and fixed under any chosen angle, thus forming the wanted three-dimensional structures.

The Joining/connecting or fastening is done by sliding the bolds of a rigid angular element into the slits of, or formed by, the brackets that are mounted/fixed on the construction- or buildingelements.

Depending of the technical or esthetical requirements, or the environment, in which the connection/fastening needs to function the form and dimension can be adapted, and the material, out of which the joining-/connecting- or fasteningelements are made, can be chosen. Also can the different construction- or buildingelements, which need to be joined, connected or fixed, be made out of various and different materials.

## Description

### Introduction:

This invention relates to a joining/fastening system for the quick assembly/joining of building elements and constructional elements, by means of a rigid angular element which slides into brackets mounted on each of the building or construction elements which need to be joined or fastened. This connection can be secured/locked depending of the need and the sort of application.
The placing of the brackets can be carried out quickly by means of a template.
With this joining/fastening system building elements and constructional elements can be joined together under any random angle forming thus three-dimensional structures of any kind.

### Field of application

Therefor this system is very suitable for (but not exclusively) do-it-yourself- kits, constructions which need to be mounted and dismounted regularly or frequently, or constructions which need to be erected quickly as for emergency accommodation. Also for temporary constructions and constructions where labourcost would be to high using classical ways of assembling. Also there where competent labourforce is not available for building, constructing or erecting complex or even simple constructions etc.....
The building and constructional elements which need to be joined/fastened by using this joining/-fastening system can be made out of different materials and can be of any size.
This applies also to the joining/fastening systemelements themselves.
The joint or connection made can be either temporary or permanent depending on the securing/locking system chosen
Although without limitation fields of application are e.g.: furniture manufacturing, carpentry, metalconstruction, plasticconstruction, building and interior building industry, packaging industry, warehousing, container and transporttechnology, do-it-yourself-kits etc.....

### The state of technology

To join or connect two or more constructional elements to eachother under a certain angle, it is often necessary to build first a framework or skeleton. Another method is using a pin and hole method, complex mitres and labour intensive work and preparation, after which many nails screws, bolts or glue are to be used.
It is not always simple to make these constructions solid. This kind of constructions need to be, made by skilled, trained and experienced personnel, labourcost is high and the speed of construction low. The reproducibility is low, and only possible by means of very expensive machinery. The flexibility of such a joining/fasteningsystem is low, which doesn't allow the construction to be adapted to the changing needs of the market, especially when of each model the numbers to be produced are low. The consequence is that such constructions become expensive.
A similar joining/fastening system as introduced in this invention is not known.

There exist metallic joining/fastening elements, usually for wooden plates for joining them under an angle of 90 degrees. These are square angles bend from strip or punched, with holes for nails and screws. Sometimes a fold pressed in the metal reinforces the angle.

Another joining system consists of a hole and pin system, where by means of an eccentric screw the pin, which has a groove, is drawn into the hole of the other plate, and thus connecting/joining the two panels together.
These connectionsystems have the disadvantage that the mechanical forces this connection can endure are quite low.
Very often a lot of nailing and screwing needs to be done, or in the case of the pen and hole systems with an eccentric screw, the connecting system can only be applied using specialised machinery and skilled personnel.

This invention has as purpose to make strong, rigid and stable connections between constructional elements in a fast, simple and low labourcost way, where the use of simple tools are sufficient or even not necessary. This invention makes it simple to create do-it-yourself kits where the bracket can be premounted in the factory, and the client/constructor only needs to assemble the different constructional elements by placing the correct rigid angular element into the corresponding premounted brackets. Depending on the need or the application this rigid angular element will be self-locking, flexible locking or permanent locking or even non-locking in case of quick dismountable constructions.
The rigid angular elements can be made in any possible angle. The size and the form of the rigid angular elements and the brackets are determined by the application. The angular element itself can be used as a third connection or supporting point for another construction element.

### Description

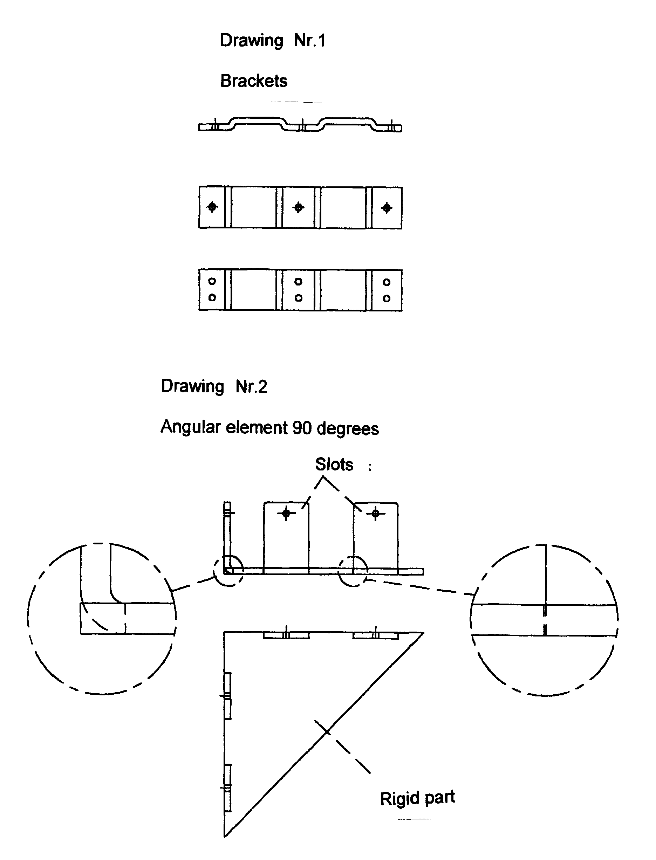

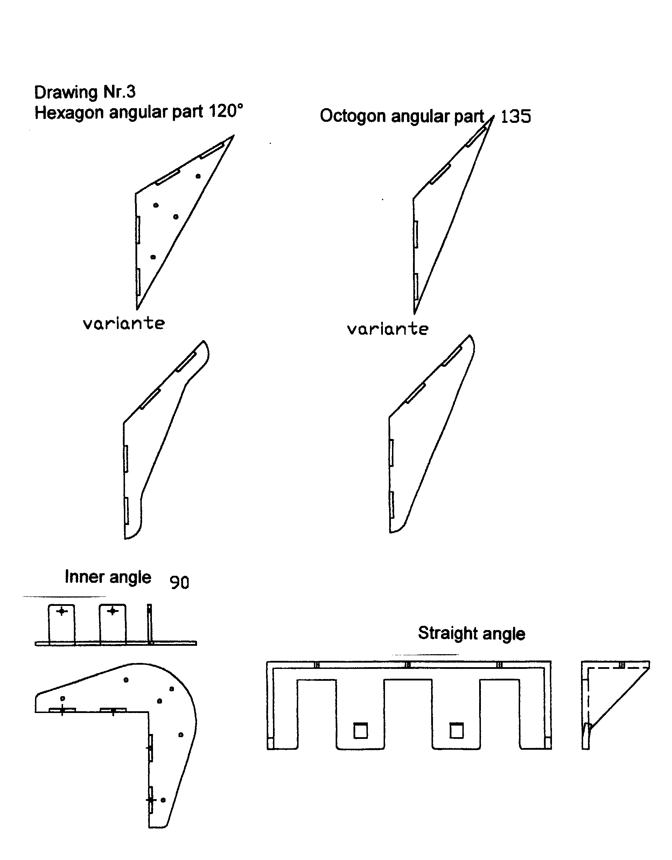

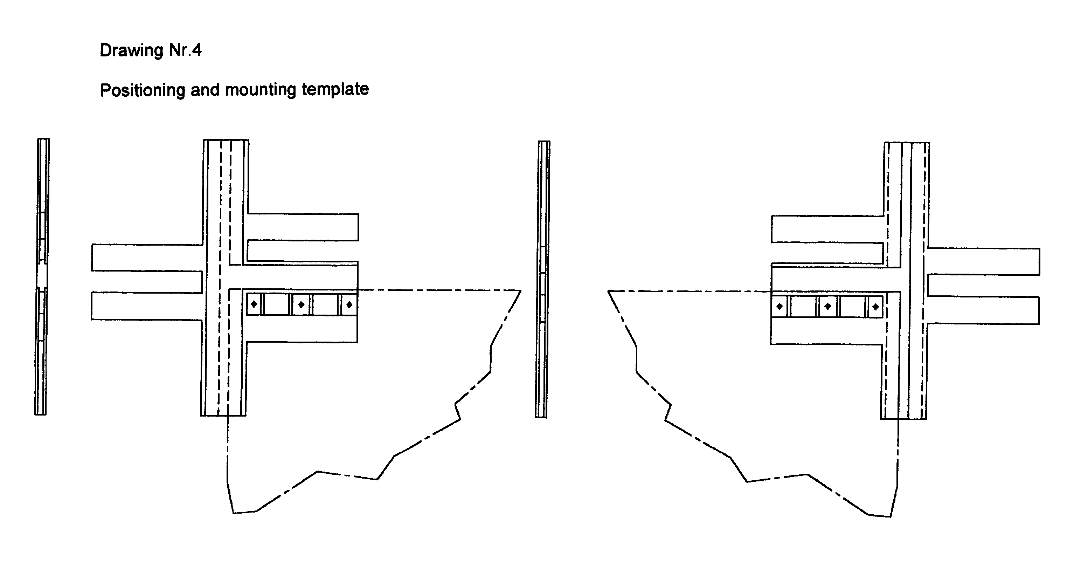

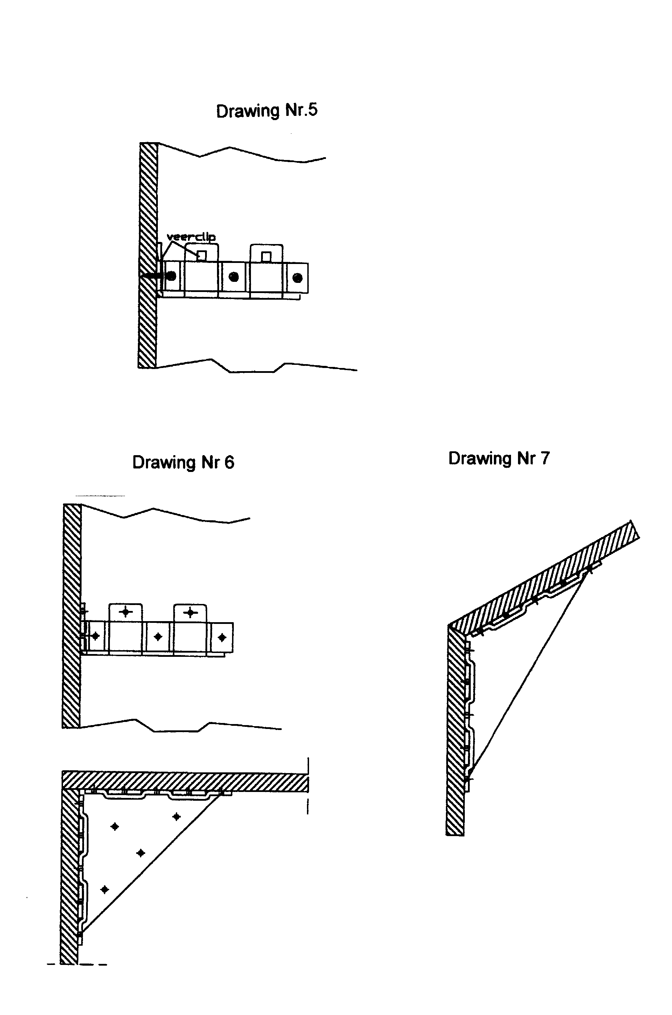

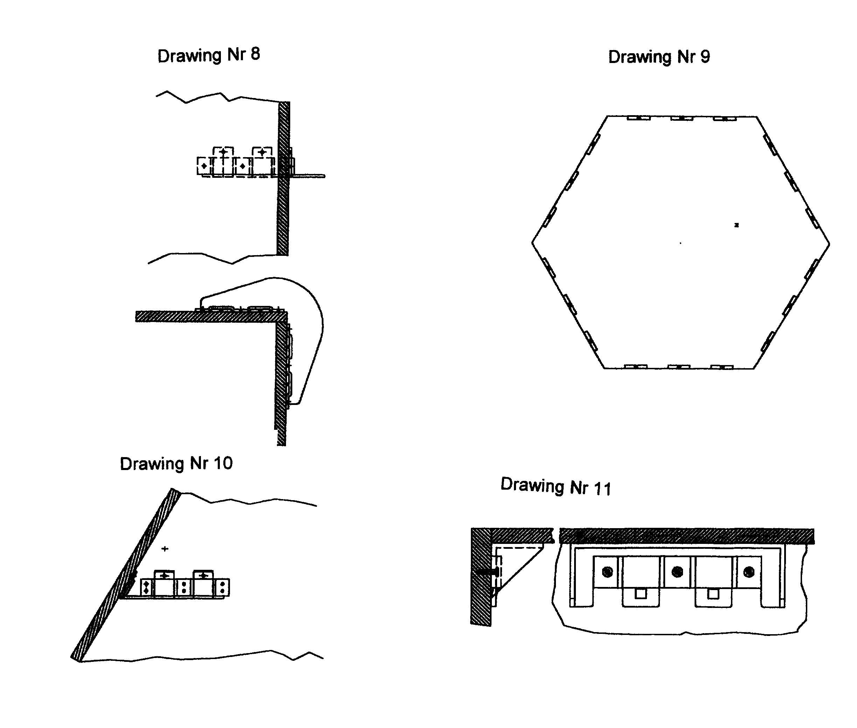

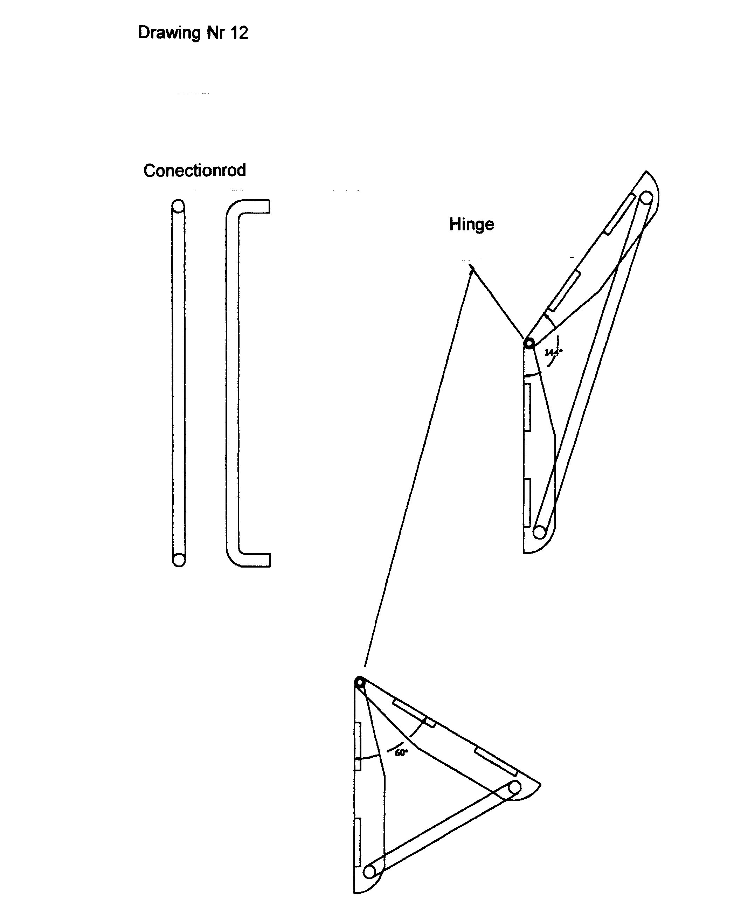

The joining/fastening system normally consists out of three separate elements: two brackets (drawing 1) and one angular element (drawing 2). The angular element consists of the rigid angular body and the bolts (one or more). Drawing 1 shows two brackets, each with a different number of connection points. The angular element can be made in different angels or can have different forms depending on the form of the final construction, the technical requirements, and the aesthetic wishes.
Some examples are given in drawings NR 3, 9 and 12.
Drawing 12 is an example of a hinged angular element, which has been made rigid by means of a connecting rod. By changing the length of this rod the angle of the angular element and thus the position of the construction elements can be altered.
By means of a template or a positioning tool (drawing 4) the brackets can be positioned accurately on the different construction elements, after which they are fastened. The fastening of the brackets is done in a classical way by means of nails screws, glue, welding etc.....
The construction elements are then placed together and the angular element is slid in the brackets on each of the construction elements. Hereby the bolts slide in the corresponding slits between the brackets and the constructionelements. The bolts are longer than the width of the brackets. The ends of the bolts appear passed the brackets. In the part that is sticking out of the brackets an eventual locking to the construction element can take place by a springclip (drawing 5), by a weld, or a screw, a nail, glue etc ... for which holes in the bolts can be foreseen. Of course the locking of the bolds and angular element can also take place on the brackets. A number of examples are displayed in drawings 6, 7, 8, 10 and 11.
Depending of the material out of which the construction/building elements are made, depending on the forces working on the construction, its application, and the available place, the angular elements can be provided with one or more bolts, and the corresponding brackets with equal number of slits/grooves in which the bolds glide when assembling the constructionelements. The other side(s) of the angular element can eventually be provided with bolts too, so that a third (or more) constructionelement with brackets or otherwise, can be joined as well. The angular elements don't necessarily need to be triangular; they can be regular or irregular polygons. (drawing 9)
The bolds can also stand under any random angle to the angular body (drawing 10). Herewith it is possible to vary the angle between the plane of the construction element and the plane of the angular body. By means of a straight angular element (drawing 11) it is possible to join two constructional elements, one as an extension of the other, in an angle of 180 degrees.
Such a straight angle can also be used as a support or as a rigidiser (stiffener) of long construction elements.
The examples given, only have as a purpose to demonstrate more specifically the properties of this invention but are by no means limitative or restrictive.
By using this joining/fastening system it is possible to createlconstruct complex three-dimensional structures from constructionelements which itself can be made from relative different materials. The angular elements give to the construction a high strength and stillness/rigidness. The present invention is by no means limited to the examples and executions and forms as given in the examples. The joining/fastening system can be made in different shapes, materials and dimensions for a most wide variety of applications, without falling beyond the scope of this invention.
For example: a steel plate onto which a bracket has been welded or formed can be joined with a plastic plate on which the bracket is screwed, by means of the angular element.
Attention has to be paid to an exact placing and positioning of the brackets.
The number of joining/connecting elements, their form, the material out of which they are made, the way of fastening the brackets to the construction elements, the form of the bolds/brackets etc., can be chosen in function of the application and in accordance with calculations and experience.

## Claims

1. Joining/ connecting system or fasteningsystem for quick joining/fastening of construction elements or buildingelements made out of the most diverse of materials. Also the joining/ fasteningsystem can be made of different materials, and can have different forms and sizes depending on the technical construction requirements and the esthetical requirements, or on the environment in which this joining/fastening system needs to function.
The joining/fastening is carried out by sliding a rigid angular element (drawing 2) with its bolds into the corresponding slit/groove/space formed by the brackets (drawing 1) and the construction elements which need to be joined/fastened.

2. Joining/connecting system or fasteningsytem characterised by the possibility that different angular elements can be used for the joining of the same construction elements on which corresponding brackets are fixed. If the angle of the angular elements are different, the construction elements are joined/ fixed under another angle using the same brackets.
The relative position of the joined constructionelements can thus be altered. The slits/grooves/spaces in the brackets correspond/ congruend with the size and form of the bolds of the angular element whereas the angle, form or the material of the angular pieces may vary.

3. Joining/connecting system or fasteningsystem characterised by its possibility of being applied and integrated in quick mounting/dismounting of three-dimensional constructions I buildings. The brackets and angular elements can be fixed or integrated in the constuctionelements on beforehand, or just before the joining takes place on the construction/erection site. Because of this, the constructionelements or modules can easily be assembled by sliding the angular pieces with their slots in the corresponding brackets. The use of tools is almost or completely superfluous, and the assembly can be done by untrained personnel.

4. Joining/connecting system or fasteningsystem characterised by a wide choice of angles of almost 0 to 360 degrees. Therefor it is simple to realise open, partly open or closed three-dimensional structures.

5. Joining/connecting system or fasteningsystem characterised by the great stiffness and sturdiness of the constructions in which it is used, this thanks to the rigid angular elements, the superb fastening possibilities of the brackets, and the possibility to secure the connecting elements.

6. Joining/connecting system or fasteningsystem characterised by the existing option of : not securing the slots of the angular pieces, to make later or frequent disassembly possible; to secure the slots of the angular pieces by means of classic fastening as screws, nails, glue, welds etc.....; to make the slots selfsecuring by means of springs or springclips (drawings 5 and 11) where the securing takes place as soon as the slots slide past the edges of the brackets.

7. Joining/connecting system or fasteningsystem characterised by the possibility of using the rigid part of the angular element as a carrying basis or as a place of connection for other constructionelements such as another plate, transportwheels etc....

8. Characterised by the possibility to make the angular elements in such way that the slots form a chosen angle with the rigid part of the angular element. In that way each of the connected constructionelements can be placed and fixed independently from the other under two different angles.
Herewith it is possible to connect the different constructionelements under different spatial, three-dimensional angels. (Drawing 10)

9. Characterised by the possibility to use templates as, or similar to the one described in drawing NR 4, herewith increasing the accuracy and speed with which the assembly can take place, and thus reducing strongly the costs. It makes it possible to fully assemble all fastening- and construction- elements on the final constructionsite. The exact emplacement and mounting of the brackets can be automated.

10. Characterised by the possibility to fix the brackets to the constructionelements in many different ways, depending of the application of the construction, the ruling forces and the environment in which the construction needs to function.

11. Characterised by the possibility to design and calculate the brackets and the angular elements/slots in such a way that they are able to endure the forces which they undergo, as well as the medium in which they need to function.

12. Characterised by the possibility to design and fit the angular elements with a hinge in the corner of the angular piece, thus making it possible to vary and choose the angle of the angular piece by connecting the two hinging parts with e.g. a rod adaptable in length.
This connecting rod or element can have a fixed length, or can be continuously adjustable in length either manual or automatically by means of a drive.
The connecting rod or element can for this purpose be designed and made in any form, and is not limited to a cylindrical section or a linear form in length, nor is it limited by the way by which it can be connected to the hinging parts of the angular element.

13. Characterised by the fact that the bolts can have any chosen form, and are not limited to a solid or hollow rectangular section. They can also have any other form, and be solid or hollow, e.g. square, round, triangular etc....
The brackets having a corresponding form so that, when they are mounted/ fixed on the constructionelements they form a congruent slit or space with the latter. In the corresponding congruent spaces/slits, the angular rigid elements are slid and fitted.

14. Characterised by the possibility to integrate or incorporate the brackets and/or slots/spaces in the construction elements. This can be realised by e.g. pressing, casting, weaving, sintering mechanical forming, eventually accompanied by a thermal, chemical, biochemical process. ( e.g. hot pressed in steel plate in a matrix, cast in plastic, woven in glassfiber of polyester composite, sintered in mineral powder or cement product, etched in plate etc... )

15. Characterised by the possibility to provide the rigid angular elements with reinforcements like folds or embossed areas.
